# FASCICULE DE BREVET EUROPEEN

(11) **EP 0 453 331 B1**
(45) Date de publication et mention de la délivrance du brevet: **04.01.1995**
(21) Numéro de dépôt: 91400609.3
(22) Date de dépôt: 06.03.1991
(51) Int. Cl.: F16C 19/52, G01P 3/44

(54) **Palier à corps roulants équipé d'un dispositif capteur d'informations orientable**
Wälzlager, das mit einem verstellbaren Informationssensor ausgerüstet ist
Roller bearing equiped with an adjustable information detector

(30) Priorité: 13.04.1990 FR 9004824
(43) Date de publication de la demande: 23.10.1991
(73) Titulaire: SNR ROULEMENTS, F-74010 Annecy (FR)
(72) Inventeur: Alff, Denis, F-74000 - Annecy (FR); Hajzler, Christian, F-74000 - Annecy (FR)
(74) Mandataire: Ernst-Schonberg, Michel

(56) Documents cités:
- FR-A- 2 574 501
- FR-A- 2 618 516

## Description

L'invention concerne un palier à corps roulants équipe d'un dispositif capteur d'informations conforme au préambule de la revendication.

La publication DE-A 2 505 802 décrit un dispositif capteur d'information intégré au roulement. Ce dispositif nécessite un processus de montage dans lequel un positionnement angulaire précis du palier est recherché pour assurer une orientation adéquate du fil de sortie des signaux d'information.

Lorsque le roulement est maintenu angulairement dans son logement par frettage ou par serrage des faces latérales du roulement, il est possible d'assister sous l'effet de fortes et brèves sollicitations mécaniques ou sous l'effet de variations de la température entraînant une dilatation différentielle, à un déplacement angulaire dudit roulement dans son logement. Le déplacement du capteur a pour conséquence l'arrachement des câbles électriques conducteurs d'informations ou des connexions électriques.

La publication FR-A 2 618 516 décrit un capteur associé à la bague extérieure du roulement par un élément en tôle métallique logé dans une rainure annulaire usinée sur ladite bague.

Cette disposition ne garantit pas l'immobilisation sûre du capteur qui ne peut être aisément monté de manière étanche sur certains roulements.

La publication FR-A 88/16795 décrit un capteur arrêté angulairement par une mortaise d'un carter. Ce dispositif nécessite une orientation du roulement par rapport à la mortaise au moment du montage dans le carter.

L'invention a pour objet de remédier à ces problèmes et concerne plus spécialement le capteur et/ou un support du capteur.

L'invention a également pour objet un montage du dispositif capteur qui évite tout contact avec les surfaces extérieures du palier nécessaires au positionnement et au maintien dudit dispositif.

L'invention a aussi pour objet un dispositif capteur montable et démontable sans outillage spécifique et sans intervention sur le palier lui-même, qui pourra fonctionner avec ou sans ledit dispositif.

Les différents objets de l'invention trouvent leur solution dans la caractéristique de la revendication.

Le palier ainsi réalisé assure la localisation axiale et radiale précise de l'élément capteur face à l'élément codeur de la partie tournante du palier pour l'obtention d'un entrefer prédéterminé tout en permettant un déplacement angulaire de l'élément capteur.

L'immobilisation angulaire de l'élément capteur sera assurée par un organe fixe extérieur au montage d'application du palier.

D'autres caractéristiques et avantages de l'invention apparaîtront à la lecture des descriptions d'exemples de réalisation du palier faites en référence aux dessins annexes dans lesquels :
- La figure 1 est une vue en coupe suivant la ligne Y1-Y2 de la figure 2 d'un dispositif de montage d'un palier de roue motrice et directrice, à l'exception du capteur
- La figure 2 est une coupe partielle transversale du dispositif dans le plan X de la figure 1,
- La figure 3 est une vue à une plus grande échelle des caractéristiques de montage du support de l'élément capteur représenté à la figure 1,
- La figure 4 est une vue éclatée en élévation d'une forme de réalisation des différents composants du palier isolés avant montage,
- La figure 5 est une vue latérale du support et de l'élément capteur représenté à la figure 4,
- La figure 6 est une vue en plan d'une variante de réalisation de l'élément support représenté à la figure 5,
- La figure 7 est une vue en coupe axiale d'un palier de roue motrice et directrice,
- La figure 8 est une vue en coupe partielle suivant la ligne VIII-VIII de la figure 7 du dispositif d'arrêt en rotation du support de l'élément capteur,
- La figure 9 est une vue en coupe axiale d'une variante de réalisation d'un palier à une rangée de corps roulants.

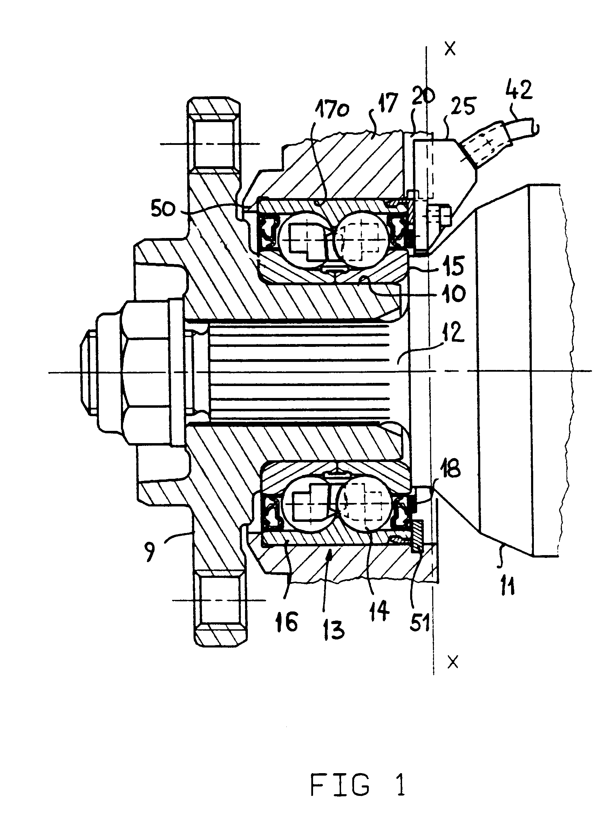

Le dispositif représenté à la figure 1 comporte une portée support 10 de palier sur un moyeu 9 entraîné en rotation par l'intermédiaire d'un arbre cannelé 12 solidaire de l'élément mené 11 d'un joint de transmission. Sur le support 10 est monté un palier 13 à deux rangées de corps roulants 14 disposés entre une bague intérieure 15 fractionnée en deux parties et une bague extérieure 16. Le palier 13 est rendu étanche à titre d'exemple par deux garnitures à lèvres d'étanchéité préassemblées décrites dans la publication FR-A 2 505 951.

Le palier 13 est monté dans un alésage 170 formé sur un élément de carter tel qu'un porte-fusée 17 en appui sur un épaulement 50 dudit alésage et est immobilisé axialement par un anneau d'arrêt 51.

Ainsi que cela est montré à la figure 3, un dispositif capteur d'informations comporte, de manière en soi connue, un élément capteur 25 et un élément codeur 18 solidaire en rotation du moyeu 9 qui est porté par un déflecteur 19 de la garniture d'étanchéité du palier 13.

A titre d'exemple illustré à la figure 3, l'élément codeur est formé par un anneau aimanté 18 à pluralité de poles N-S fixé sur le déflecteur 19 de la garniture d'étanchéité par tout moyen connu d'accrochage tel que collage ou le surmoulage ou par simple aimantation.

L'anneau 18 se déplace devant l'élément capteur 25 constitué, ainsi que cela est bien connu, par un ou plusieurs capteurs élémentaires d'informations associés à des circuits électroniques.

L'élément capteur 25 est solidarisé avec un support 26 annulaire monté et maintenu par élasticité à la manière d'un anneau d'arrêt sur la bague extérieure 16 et présente, à cet effet, un bord 27 conique d'accrochage coopérant avec le flanc 30 complémentaire d'une gorge 31 usinée sur la surface cylindrique externe de la bague 16 ainsi qu'une face d'appui 29a venant en contact par serrage élastique avec la face 29 de la bague extérieure 16. L'effort de serrage élastique possède une composante radiale qui plaque le support 26 dans la rainure 31.

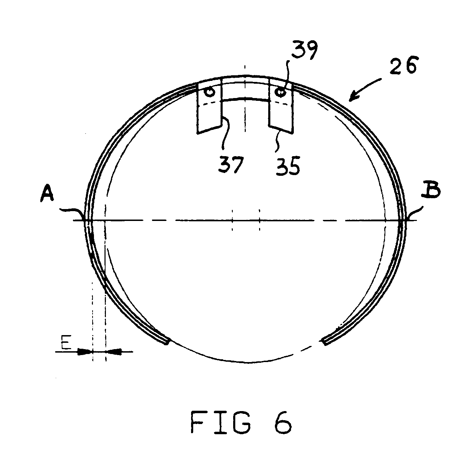

La surface annulaire extérieure 60 du support 26 vient ainsi se loger sans interférence dans l'alésage 170. Il est également possible de donner au support 26 une ovalisation E ainsi que représentée à la figure 6 de manière à réaliser un serrage élastique supplémentaire aux points diamétralement opposés A et B dans l'alésage 170 du porte-fusée 17 susceptible de s'opposer aux vibrations du support dans ledit alésage.

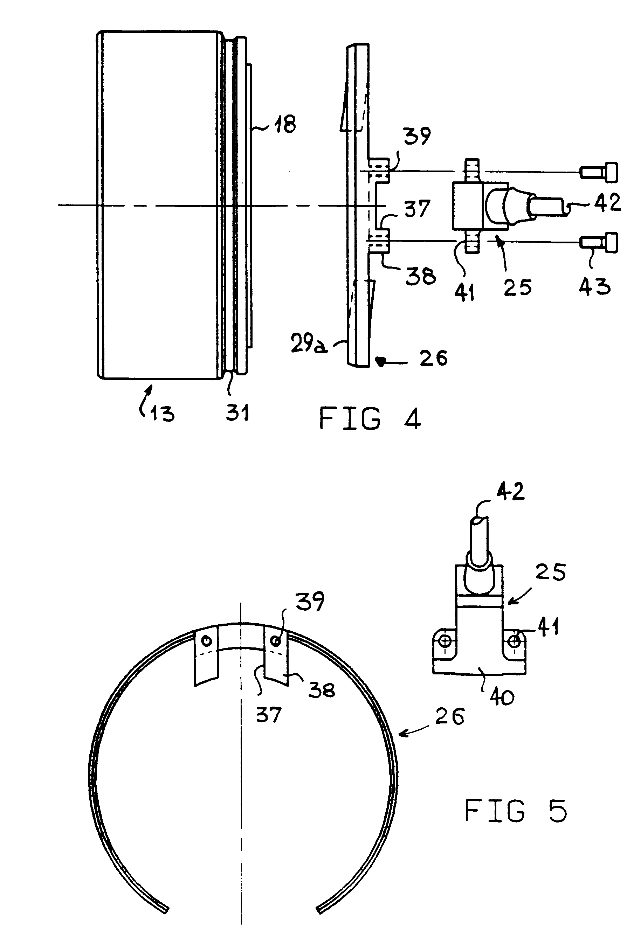

La face 29a du support 26 opposée au bord 27 fait partie d'une tête de retenue 35 de l'élément capteur 25. La tête de retenue 35 est constituée, ainsi que cela est montré sur les figures 4 et 5, par une glissière 37 latéralement limitée par deux nervures protectrices 38 traversées par deux perçages taraudés 39 de réception des vis 43 de fixation de l'élément capteur 25. A cet effet, l'élément capteur 25 est contenu dans un bloc protecteur 40 portant deux trous de fixation 41 en correspondance des perçages 39 ainsi que le câble de connexion 42, transmetteur de signaux.

Lorsque le palier à corps roulants équipé du support 26 est monté dans le porte-fusée 17, ainsi que cela est montré à la figure 3, la partie annulaire du support 26 est maintenue dans l'alésage 170 du porte-fusée 17, récepteur de la bague extérieure 16, et dans la gorge 31 de cette même bague. Le montage ainsi réalisé est indémontable et protégé contre tout risque d'arrachement.

Par contre, rien n'interdit la rotation relative du support 26 par rapport à la bague 16. Le montage du palier 13 dans le porte-fusée 17 permet ainsi le positionnement angulaire de l'élément capteur 25 et de son support 26.

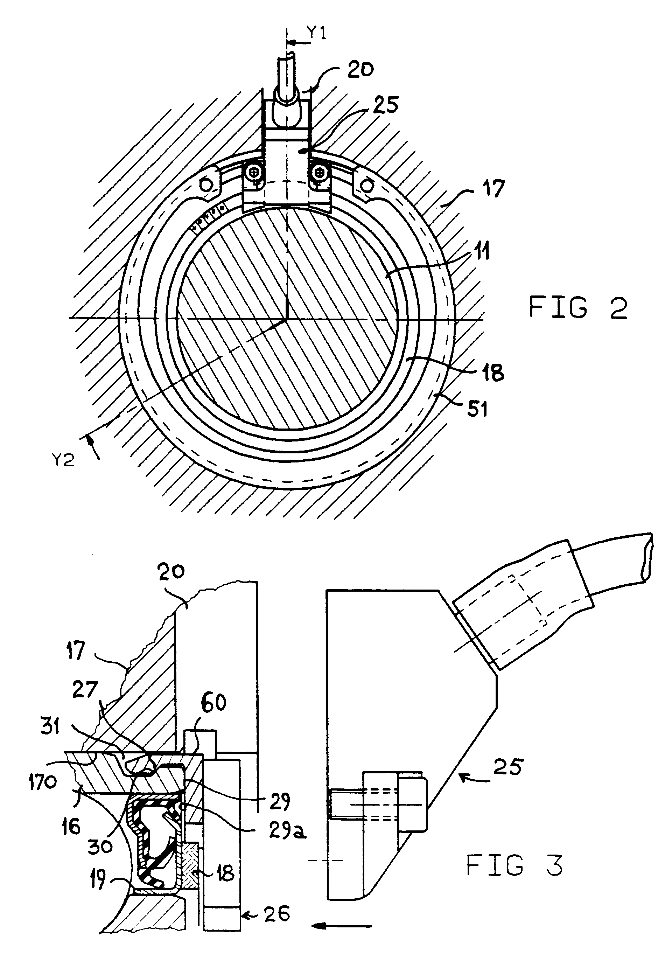

Ainsi que cela est montré à la figure 2, l'arrêt en rotation du support 26 et de l'élément capteur 25 est assuré par une mortaise 20 du porte-fusée fixe 17. Les contraintes sur l'élément capteur susceptibles d'être créées par un déplacement angulaire accidentel de la bague extérieure 16 dans son logement sont ainsi évitées.

Dans l'exemple de palier décrit précédemment, en référence des figures 1 à 5, l'élément capteur 25 est fixé sur son support 26 par l'intermédiaire de vis. Cette fixation n'est pas limitative et tout autre système connu de retenue positive peut être adapté. De même, lorsque le démontage de l'élément capteur 25 n'est pas nécessaire, les organes 25, 26 pourront être réalisés, à titre d'exemple, sous la forme d'une armature élastique semi-annulaire sur laquelle est moulée la partie capteur proprement dite.

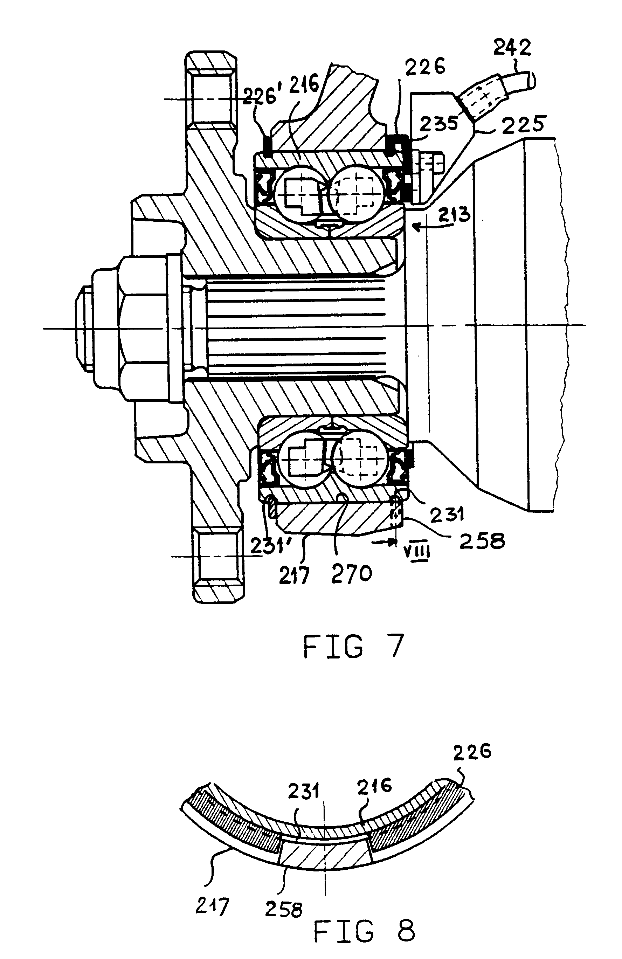

Le palier représenté à la figure 7 sur lequel les organes correspondant à la figure 1 portent des références augmentées de 200, comporte une bague extérieure 216 d'un palier 213 montée frettée dans l'alésage 270 formé sur un porte-fusée 217 et immobilisée axialement au moyen d'anneaux d'arrêt fendus 226, 226′ placés dans des gorges de reception 231, 231′ de la bague extérieure 216. L'anneau 226 présente une patte radiale 235 repliée en direction du centre de l'anneau pour constituer le moyen de retenue de l'élément capteur 225 tel que décrit précédemment.

Ainsi que cela est montré à la figure 8, le porte-fusée 217 présente un bossage axial 258 disposé dans le plan de la gorge 231 de la bague extérieure 216 et engagé dans la fente de l'anneau 226 de façon à empêcher la rotation de l'anneau 226 après montage du palier 213 dans le porte-fusée 217. Le bossage 258 est fixé angulairement sur le porte-fusée de telle sorte que la position du câble 242 solidaire de l'élément capteur 225 monté sur la patte 235 favorise son branchement.

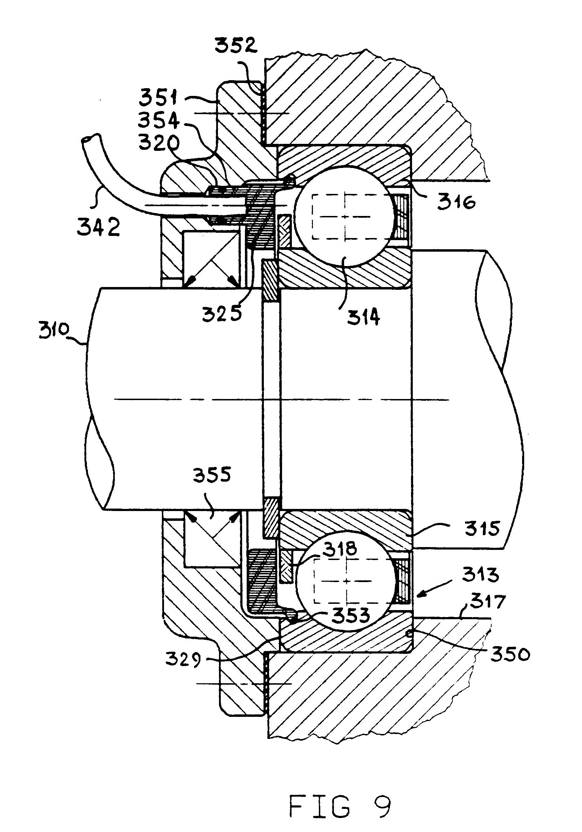

Une autre caractéristique de l'invention est illustrée par la figure 9. Un arbre 310 tournant porte un palier 313 à une rangée de corps roulants 314 disposés entre une bague intérieure 315 et une bague extérieure 316.

Le palier 313 est monté dans un alésage formé dans un carter 317 en appui sur un épaulement 350 de positionnement axial et est immobilisé axialement par un couvercle 351 réglé en position axiale par des câbles 352 par rapport à la face 329 de la bague extérieure 316 de façon à empêcher tout mouvement axial de la bague 316 par rapport au carter 317.

Un dispositif d'étanchéité 355 est monté entre le couvercle 351 et l'arbre 310. Un dispositif capteur d'informations est constitué par un élément codeur 318 solidaire en rotation d'un élément tournant tel que la bague intérieure 315.

L'anneau 318 se déplace devant un élément capteur 325 annulaire constitué par un ou plusieurs capteurs élémentaires d'informations associés à des circuits électroniques.

L'élément capteur 325 est maintenu axialement dans une gorge 353 usinée dans l'alésage intérieur de la bague extérieure 316, mais peut être déplacé angulairement par rapport à ladite bague. L'élément capteur 325 présente une extension 354 qui porte le câble de connexion 342.

L'extension 354 est logée dans un perçage 320 du couvercle 351. Le perçage 320 constitue ainsi la traversée du câble 342 qui possède une position angulaire prédéfinie par rapport à une référence constituée, à titre d'exemple, par les fixations du couvercle sur le carter.

L'extension 354 est encastrée de manière étanche par des joints périphériques dans le perçage 320 solidarisant ainsi angulairement l'élément capteur au couvercle 351. Le positionnement de l'élément capteur 325 par rapport à la bague extérieure 316 favorise le positionnement du couvercle 351. Lorsque le couvercle 351 est fixé au carter 317, l'élément capteur 325 est ainsi immobilisé en rotation et ne risque pas d'être endommagé par une rotation accidentelle de la bague extérieure 316 dans ledit carter, par exemple sous l'effet d'une dilatation différentielle des organes sous l'effet de fortes variations de température.

## Revendications

1. Palier à corps roulants équipé d'un dispositif capteur d'informations orientable dans lequel un palier (13, 213, 313) à corps roulants (14, 214, 314) est disposé dans un logement d'un carter (17, 117, 317), et dans lequel un dispositif capteur d'informations possède un élément codeur (18, 218, 318) qui se déplace devant un capteur (25, 225, 325) fixé à un support annulaire (26, 226, 316), caractérisé par le fait que le support est maintenu élastiquement par un bord d'accrochage au contact des flancs d'une rainure de la bague (16, 216, 316) extérieure dans le but de permettre sa rotation par rapport à ladite bague, en retenant l'élément capteur (25, 225, 325).

2. Palier selon la revendication 1, caractérisé par le fait que l'élément capteur (25) est positionné angulairement dans une mortaise (20) d'un porte-fusée (17).

3. Palier selon la revendication 1 ou 2, caractérisé par le fait que la surface annulaire extérieure (60) d'un support de capteur (26) est logée dans l'alésage (170) d'un porte-fusée (17).

4. Palier selon l'une quelconque des revendications 1 à 3, caractérisé par le fait que la partie annulaire du support de capteur (26) possède une configuration ovale de part et d'autre de la tête de retenue (35) de l'élément capteur (25).

5. Palier selon la revendication 1, caractérisé par le fait qu'un anneau (226) fendu d'arrêt axial du palier (213) est configuré localement en un moyen de retenue (235) de l'élément capteur (225).

6. Palier selon la revendication 5, caractérisé par le fait qu'un porte-fusée (217) possède une protubérance (258) locale située entre les deux extrémités de l'anneau (226) support de l'élément capteur (225).

7. Palier selon l'une quelconque des revendications 1 à 6, caractérisé par le fait que l'élément capteur (25, 225) est démontable de son support annulaire (26, 226).

8. Palier selon l'une quelconque des revendications 1 à 6, caractérisé par le fait que le support annulaire (26, 226) et l'élément capteur (25,225) ne forment qu'une seule et même pièce.

9. Palier selon la revendication 1, porteur d'un dispositif capteur d'informations, dans lequel un roulement (313) à corps roulants (314) est disposé dans un logement d'un carter (317) et est en appui axial sur un épaulement (350) dudit carter tandis qu'un couvercle (351) est immobilisé par rapport audit carter, et dans lequel l'élément codeur (318) est solidaire en rotation d'un élément tournant (315) et se déplace devant l'élément capteur (325) solidarisé à la bague extérieure (316) du palier, caractérisé par le fait que l'élément capteur (325) possède une extension (354) encastrée dans un perçage (320) du couvercle (351).

10. Palier selon la revendication 9, caractérisé par le fait que l'extension (354) porte un câble de connexion (342) au travers du perçage (320).

11. Palier selon la revendication 10, caractérisé par le fait qu'un moyen d'étanchéité entre le câble (342) et le perçage (320) est formé à la périphérie de l'extension (354) encastrée dans le perçage (320) du couvercle (351).

12. Palier selon la revendication 11, caractérisé par le fait que le perçage (320) a une position angulaire définie sur le couvercle (351) par rapport à une position de référence.

## Claims

1. A bearing with rolling bodies fitted with an information sensor device which may be oriented in which a bearing (13, 213, 313) with rolling bodies (14, 214, 314) is disposed in a housing of a casing (17, 117, 317) and in which an information sensor device comprises an encoding member (18, 218, 318) which is displaced in front of a sensor (25, 225, 325) fixed to an annular support (26, 226, 316), characterised in that the support is held elastically by a connection edge in contact with the flanks of a groove of the outer ring (16, 216, 316) in order to enable its rotation with respect to this ring, while retaining the sensor member (25, 225, 325).

2. A bearing as claimed in claim 1, characterised in that the sensor member (25) is positioned angularly in a mortise (20) of a stub axle holder (17).

3. A bearing as claimed in claim 1 or 2, characterised in that the outer annular surface (60) of a sensor support (26) is housed in the bore (170) of a stub axle holder (17).

4. A bearing as claimed in any one of claims 1 to 3, characterised in that the annular portion of the sensor support (26) has an oval configuration on either side of the retaining head (35) of the sensor member (25).

5. A bearing as claimed in claim 1, characterised in that an axial split stop ring (226) of the bearing (213) is configured locally as a holding member (235) for the sensor member (225).

6. A bearing as claimed in claim 5, characterised in that a stub axle holder (217) comprises a local projection (258) disposed between the two ends of the ring (226) supporting the sensor member (225).

7. A bearing as claimed in any one of claims 1 to 6, characterised in that the sensor member (25, 225) may be dismantled from its annular support (26, 226).

8. A bearing as claimed in any one of claims 1 to 6, characterised in that the annular support (26, 226) and the sensor member (25, 225) form a single component.

9. A bearing as claimed in claim 1, bearing an information sensor device, in which a bearing (313) with rolling bodies (314) is disposed in a housing of a casing (317) and bears axially on a shoulder (350) of the casing whilst a cover (351) is immobilised with respect to this casing, and in which the encoding member (318) is rigid in rotation with a rotary member (315) and is displaced in front of the sensor member (325) rigid with the outer ring (316) of the bearing, characterised in that the sensor member (325) comprises an extension (354) fixed in a hole (320) of the cover (351).

10. A bearing as claimed in claim 9, characterised in that the extension (354) bears a connection cable (342) via the hole (320).

11. A bearing as claimed in claim 10, characterised in that a sealing means between the cable (342) and the hole (320) is formed on the periphery of the extension (354) fixed in the hole (320) of the cover (351).

12. A bearing as claimed in claim 11, characterised in that the bore (320) has a predetermined angular position on the cover (351) with respect to a reference position.

## Patentansprüche

1. Wälzlager, das mit einem einstellbaren Informationssensor ausgerüstet ist, wobei ein Lager (13, 213, 313) mit Wälzkörpern (14, 214, 314) in einer Aussparung eines Gehäuses (17, 117, 317) vorgesehen ist und wobei ein Informationssensor ein Kodierteil (18, 218, 318) aufweist, das an einem Sensor (25, 225, 325) vorbeiläuft, der an einer ringförmigen Halterung (26, 226, 326) befestigt ist, dadurch gekennzeichnet, daß die Halterung elastisch mittels eines Verankerungsrandes unter Anliegen der Flanken in einer Nut im Außenring (16, 216, 316) gehalten ist, um ihre Rotation bezüglich des Ringes zu ermöglichen unter Festhaltung des Sensorteils (25, 225, 325).

2. Lager nach Anspruch 1, dadurch gekennzeichnet, daß das Sensorteil (25) winkelmäßig in einem Einschnitt (20) eines Achsschenkelträgers (17) positioniert ist.

3. Lager nach Anspruch 1 oder 2, dadurch gekennzeichnet, daß die ringförmige Außenfläche (60) einer Sensorhalterung (26) in einer Aussparung (170) eines Achsschenkelträgers (17) eingesetzt ist.

4. Lager nach einem der Ansprüche 1 bis 3, dadurch gekennzeichnet, daß der ringförmige Abschnitt der Halterung des Sensors (26) eine ovale Konfiguration beidseits der Halteanordnung (35) des Sensorteils (25) aufweist.

5. Lager nach Anspruch 1, dadurch gekennzeichnet, daß ein geschlitzter Ring (226) für die axiale Festlegung des Lagers (213) stellenweise als Rückhalteanordnung (235) für das Sensorteil (225) ausgestaltet ist.

6. Lager nach Anspruch 5, dadurch gekennzeichnet, daß ein Achsschenkelträger (217) einen örtlichen Vorsprung (258) aufweist, der zwischen den beiden Enden des Halteringes (226) für das Sensorteil (225) vorgesehen ist.

7. Lager nach einem der Ansprüche 1 bis 6, dadurch gekennzeichnet, daß das Sensorteil (25, 225) lösbar an seiner ringförmigen Halterung (26, 226) befestigt ist.

8. Lager nach einem der Ansprüche 1 bis 6, dadurch gekennzeichnet, daß die ringförmige Halterung (26, 226) und das Sensorteil (25, 225) in einem und demselben Bauteil zusammengefaßt sind.

9. Lager nach Anspruch 1 als Träger für einen Informationssensor, wobei ein Lager (313) mit Wälzkörpern (314) in einer Aussparung eines Gehäuses (317) angeordnet ist und sich axial auf einem Vorsprung (350) des Gehäuses abstützt, während eine Abdeckung (351) bezüglich des Gehäuses festgelegt ist und wobei ein Kodierteil (318) drehfest mit einem sich drehenden Bauteil (315) verbunden ist und vor dem Sensorteil (325) vorbeiläuft, welches mit dem Außenring (316) des Lagers fest verbunden ist, dadurch gekennzeichnet, daß das Sensorteil (325) eine Verlängerung (354) aufweist, welche in eine Bohrung (320) der Abdeckung (351) eingreift.

10. Lager nach Anspruch 9, dadurch gekennzeichnet, daß die Verlängerung (354) mit einem Verbindungskabel (342), welches die Bohrung (320) durchsetzt, versehen ist.

11. Lager nach Anspruch 10, dadurch gekennzeichnet, daß eine Dichtanordnung zwischen dem Kabel (342) und der Bohrung (320) vorgesehen ist und zwar am Umfang der Verlängerung (354), welche sich in die Bohrung (320) der Abdeckung (351) erstreckt.

12. Lager nach Anspruch 11, dadurch gekennzeichnet, daß die Bohrung (320) eine Winkelstellung einnimmt, welche durch die Abdeckung (351) bezüglich einer Markierungsstellung festgelegt ist.
